# EUROPÄISCHE PATENTSCHRIFT

(11) **EP 2 252 440 B1**
(45) Veröffentlichungstag und Bekanntmachung des Hinweises auf die Patenterteilung: **28.11.2012**
(21) Anmeldenummer: 09709877.6
(22) Anmeldetag: 11.02.2009
(51) Int. Cl.: B29B 13/10, B29B 17/00, B29C 45/18

(54) **VERFAHREN UND VORRICHTUNG ZUM SPRITZGIEßEN VON KUNSTSTOFFMATERIAL**
METHOD AND DEVICE FOR INJECTION MOLDING PLASTIC MATERIAL
PROCÉDÉ ET DISPOSITIF DE MOULAGE PAR INJECTION DE MATÉRIAU PLASTIQUE

(30) Priorität: 14.02.2008 AT 2452008
(43) Veröffentlichungstag der Anmeldung: 24.11.2010
(73) Patentinhaber: EREMA Engineering Recycling Maschinen und Anlagen Gesellschaft m.b.H., 4052 Ansfelden-Linz (AT)
(72) Erfinder: HACKL, Manfred, 4040 Linz (AT); FEICHTINGER, Klaus, 4040 Linz (AT); WENDELIN, Gerhard, 4030 Linz (AT)
(74) Vertreter: Wildhack & Jellinek
(86) Internationale Anmeldenummer: PCT/AT2009/000052
(87) Internationale Veröffentlichungsnummer: WO 2009/100473

(56) Entgegenhaltungen:
- EP-A- 0 321 742
- EP-A- 1 273 412
- WO-A-2006/079128
- DE-A1- 10 149 515
- US-A- 2 382 655
- US-A- 4 222 728
- GOTZMANN G: "RECYCLING OHNE ZWISCHENSCHRITTE. ÖRECYCLING WITHOUT INTERMEDIATE STEPS" KUNSTSTOFFE, CARL HANSER VERLAG, MUNCHEN, DE, Bd. 86, Nr. 8, 1. August 1996 (1996-08-01), Seite 1126,1128,1130, XP000599765 ISSN: 0023-5563

## Beschreibung

Die Erfindung betrifft ein Verfahren gemäß dem Oberbegriff des Anspruchs 1 sowie eine Vorrichtung gemäß dem Oberbegriff des Anspruchs 8.

Das Spritzgießen stellt das wohl wichtigste Verfahren zur Herstellung von Formteilen dar. Etwa 60 % aller Kunststoffverarbeitungsmaschinen sind Spritzgießmaschinen (30 % Extruder, 10 % Exoten"). Auf Spritzgießmaschinen werden Formteile von einigen wenigen Milligramm bis zu 30 kg Schussgewicht hergestellt.

Der Spritzguss eignet sich vor allem für Massenprodukte, da der Rohstoff (Granulat) in meist einem Arbeitsgang in ein Fertigteil umgewandelt werden kann. Die Nacharbeit ist gering bzw. kann ganz entfallen und selbst komplizierte Geometrien können in einem Arbeitsgang gefertigt werden. Zudem lassen sich Füllstoffe vielfältiger Art z.B. Glasfasern, Talkum, Ruß, Metellspäne, Pigmente, polymere Additive etc. einarbeiten, wodurch die Eigenschaften des Fertigteils gezielt modifiziert werden können.

Die Eigenschaften eines Fertigteils werden durch den verwendeten Werkstoff, die Formgebung und die Art und Durchführung der Verarbeitung bestimmt. Bei Kunststoffen, insbesondere bei Thermoplasten, sind diese Einflüsse noch stärker als bei Metallen erkennbar. Die Auswahl des "richtigen" Kunststoffes als Werkstoff (teilkristallinfamorph) hängt in starkem Maße von seinem molekularen Aufbau ab. Im Spritzgießverfahren werden üblicherweise fast ausschließlich thermoplastische Polymere verarbeitet. Thermoplaste setzen sich aus linearen Makromolekülen zusammen, die entweder statistisch verknäult (amorph), regelmäßig angeordnet (kristallin) oder auch gestreckt (orientiert) im Fertigteil vorliegen. In den meisten Fällen findet man alle drei Zustände in einem Fertigteil vereint. Aufgrund des relativ hohen Molekulargewichtes aller Kunststoffe wird man niemals einen 100 % kristallinen Zustand im Fertigteil erreichen, in diesem Zusammenhang spricht man vom Kristallinitätsgrad (Verhältnis: kristallines Volumen/Gesamtvolumen). Übliche Kristallinitätsgrade teilkristalliner Formteile liegen zwischen 50 % und 80 % und hängen neben den werkstoffspezifischen Eigenschaften vor allem von der Konstruktion (Werkzeug) und den Verarbeltungsparametern ab.

Ein weiterer wichtiger Gesichtspunkt für die richtige Werkstoffauswahl ist die spätere Einsatztemperatur des Fertigteils. Hier muss insbesondere auf den Glasübergangstemperaturbereich geachtet werden. Da bei einigen Kunststofftypen die Glasübergangstemperatur im Bereich der Raumtemperatur liegt, kann die Frage nach dem Einsatz oberhalb oder unterhalb der Glasübergangstemperatur sehr entscheidend sein, da sich im Bereich der Glasübergangstemperatur viele mechanische Eigenschaften "schlagartig" ändern.

Die wichtigsten Verarbeitungsparameter beim Spritzgießen sind die Massetemperatur, die Werkzeugtemperatur, die Formfüllzeit bzw. das Einspritzvolumen bzw. der Druckverlauf im Werkzeug (Forminnendruck).

Die Formfüllzeit und der Druckvertauf im Werkzeug bestimmen entscheidend den Prozess der Formfüllung und somit die mechanischen Eigenschaften des Fertigteils. Da die meisten Kunststoffe während des Abkühlvorganges schwinden, muss bis zum Erreichen des Siegelpunktes (Erstarrung des Angusses) Formmasse unter Nachdruck nachgeschoben werden. Nach Erreichen des Siegelpunktes wird der Nachdruck abgeschaltet. Das Formteil verweilt jedoch noch eine gewisse Zeit (Restkühtzeit) im geschlossenen Werkzeug. Während dieser Restkühlzeit fällt die Formteiltemperatur unter die Schmelztemperatur bzw. die Erweichungstemperatur, sodass beim anschließenden Auswerfen des Fertigteils eine Verformung unterbunden wird. Den gesamten Zeitraum von Beginn der Werkzeugfüllung bis zum nächstfolgenden Beginn nennt man Zykluszeit.

Die zu wählenden Masse- und Werkzeugtemperaturen sind werkstoffspezifische Größen und werden in den meisten Fällen vom Kunststoffhersteller vorgegeben bzw. empfohlen. Durch sie kann Einfluss auf die Eigenschaften des Fertigteils genommen werden. So entscheidet z. B. bei PET die Werkzeugtemperatur ganz entscheidend über den kristallinen Aufbau des Fertigteils: niedrige Werkzeugtemperatur bewirkt schnelle Abkühlung, das Fertigteil ist amorph und durchsichtig, hohe Werkzeugtemperatur erhöht den Kristallinitätsgrad und somit z. B. die mechanischen Eigenschaften des Formteils. Übliche Massetemperaturen bei der Verarbeitung von Massekunststoffen (PP, PE, PS, ...) liegen im Bereich von 220° bis 280°C, Werkzeugtemperaturen zwischen 30° und 120°C. Hochleistungskunststoffe (PEEK, PPS, LCP's ...) erfordern Massetemperaturen von bis zu 480°C und Werkzeugtemperaturen von bis zu 200°C. Das Thermoptast-Spritzgießen ist Grundlage für alle anderen Spritzgießverfahren und heute das am häufigsten verwendete Kunststoffverarbeitungsverfahren überhaupt.

Spritzgießmaschinen - auch die im vorliegenden Fall eingesetzte Spritzgießmaschine - bestehen generell aus zwei Teilen: Der Spritzeinheit bzw. Plastifiziereinheit, die das Kunststoffgranulat aufbereitet und unter Druck in das Werkzeug einspritzt, und der Schließeinheit, die das Werkzeug (auch Form) aufnimmt und es öffnet und schließt.

Kernstück der Spritzeinheit ist eine Schneckenwelle, auch Schnecke genannt, die in einem Zylinder bzw. Gehäuse steckt. Der Innendurchmesser des Zylinders ist gleich dem Außendurchmesser der Schnecke. Der Zylinder wird meist Schneckenzylinder genannt. Im hinteren Bereich des Schneckenzylinders befindet sich ein Trichter, in den das Kunststoffgranulat gefüllt wird. Durch eine Öffnung (den Füllblock) rieselt das Granulat in den Zylinder. Von einem Antrieb gedreht, rotiert die Schnecke im Schneckenzylinder und transportiert das Granulat vorwärts. Beim Thermoplast-Spritzgießen wird der Schneckenzylinder mittels elektrischer Heizbänder von außen erwärmt. Durch diese Hitze und die spezielle Geometrie der Schnecke, wird das Granulat nicht nur befördert, sondern auch geschert, dabei schmilzt der Kunststoff und plastifiziert und homogenisiert. An der Spitze des Schneckenzylinders befindet sich eine Düse, die den Übergang zum Werkzeug bildet.

Im Laufe des Dosiervorgangs wird die Formmasse meist durch eine Rückströmsperre bis zur Düse transportiert und davor gestaut. Um genügend Stauraum für die Formmasse zu bieten, wird die Schnecke axial nur mit einem geringen Druck (Staudruck) beaufschlagt, so dass sie sich Richtung Einfülltrichter verschieben kann und sich so zwischen Rückströmsperre und Düse der sogenannte Schneckenvorraum bildet, in dem sich das Massevolumen befindet. Der Staudruck wirkt gegen die Schmelze, so dass die Schmelze verdichtet wird, und zieht die Schnecke nicht zurück. Der Druck, den die Schmelze ausübt, bewegt die Schnecke zurück.

Beim Einspritzvorgang wird die Schnecke axial zur Düse hin gedrückt, wobei sich die Rückströmsperre verriegelt und so das Massevolumen durch die Düse in das Werkzeug gespritzt wird.

Die Rückstromsperre ist ein Bauteil der Spritzgussmaschine. Sie besteht im wesentlichen aus Sperrring, Schneckenspitze und Druckring und sitzt an der Spitze der Dosierschnecke. Von ihrer Funktion hängt die Qualität des Spritzgusstells maßgeblich ab. Während des Einspritzvorgangs verhindert die Rückstromsperre ein Zurückfließen der Materialschmelze In die Schneckgänge. Ebenso ermöglicht sie beim Dosieren den Materialfluss vom Schneckenraum in den Polsterraum. Wird die Dosierschnecke gedreht, so fördert sie das plastische Material durch die geöffnete Rückstromsperre in den Polsterraum und die Schnecke bewegt sich in axial Richtung bis zum eingestellten Wert nach hinten. Beim Einspritzen wird die Schnecke über eine Hydraulik nach vorne geschoben. Jetzt verschließen Stau und Sperrring den Weg Richtung Schnecke. Das dosierte Material wird nun ohne Druck- und Mengenverlust in die Spritzgussform gedrückt.

Nach einer 90 bis 98 %-igen Teilefüllung wird auf den Nachdruck umgeschaltet. Dabei muss im Zylinder Masse verbleiben (Restmassepolster) da sonst der Druck nicht auf die Masse wirken kann. Der Nachdruck wird benötigt um den Volumenschwund auszugleichen.

Bei der Thermoplastverarbeitung wird häufig die Dreizonenschnecke verwendet. In der sogenannten Einzugszone wird das Kunststoffgranulat eingezogen und in die nächste Zone, der Kompressionszone gefördert, wo der Kunststoff plastifiziert und verdichtet (und gegebenenfalls entgast) wird. Die Schmelze wird danach in der Meteringzone homogenisiert und schließlich durch die Rückströmsperre vor die Schnecke gedrückt, welche sich als Folge des zunehmenden Staudruckes im Zylinder axial nach hinten bewegt.

Aus dem Stand der Technik sind unterschiedliche Verfahren und Vorrichtungen zum Spritzgießen bekannt.

Aus der DE 198 03 422 A1 ist beispielsweise ein Verfahren und eine Vorrichtung zum Spritzpressen von faserverstärkten Kunststoffen bekannt.

Das offenbarte Verfahren sieht vor, ein Kunststoffeusgangsmaterial, z.B. zerkleinertes oder granuliertes Kunststoffausgangsmaterial einer Plastfizierungseinrichtung, bestehend aus einem Extrudergehäuse und einer sich im Extrudergehäuse um eine Längsachse drehenden Extruderschnecke, aufzugeben und in der Plastifizierungseinrichtung zu plastifizieren und in Richtung eines Formwerkzeuges zu fördern. Im Bereich der Plastifizierungseinrichtung wird zu der plastifizierten Kunststoffmasse Fasermaterial zugegeben und beim weiteren Transportieren in der Plastifizierungseinrichtung mit der plastifizierten Kunststoffmasse vermischt. Danach wird die plastifizierte, Fasern enthaltende Masse einer Einspritzeinrichtung zugeführt und mit der Einspritzeinrichtung durch eine Einspritzdüse in ein aus mindestens zwei Teilen gebildetes Formwerkzeug eingespritzt und anschließend im Formwerkzeug zu einem Formling gepresst. Das Kunststoffausgangsmaterial wird hierbei über einen Schredder dem Extruder zugeführt, wobei gegebenenfalls dem Ausgangsmaterial im Schredder Additive beigemengt werden.

Die offenbarte Vorrichtung zum Durchführen des Verfahrens weist eine Plastifizierungseinrichtung mit einem Extrudergehäuse und einer im Extrudergehäuse um eine Längsachse drehbar angeordneten Extruderschnecke, eine Dosierungseinrichtung für Fasermaterial, eine Einspritzeinrichtung mit einem Einspritzzylinder, einem Einspritzkolben und einer Einspritzdüse sowie einem Pressformwerkzeug mit aufeinander zu bewegbar angeordneten Formwerkzeughälften auf. Weiterhin sitzt am Beginn des Extruderzylinders ein Schredder, welcher Kunststoffausgangsmaterial zum einen zerkleinert, durch Friktionswärme erhitzt und zum anderen der Extruderschnecke im Extruderzylinder zuführt.

Dieses Verfahren und die Vorrichtung haben sich durchaus bewährt, sind jedoch für die Verarbeitung von Kunststoffmischungen, insbesondere Mischungen mit zumindest einer Polyesterkomponente nicht geeignet, weil insbesondere Polyester nahe an ihrem Schmelzpunkt empfindlich auf die natürliche Luftfeuchtigkeit reagieren, das heißt durch hydrolytischen Abbau die Kettenlänge der Moleküle verkürzt wird, was nachteilige Veränderungen der Werkstoffeigenschaften, z.B. verminderte Festigkeit oder geänderte Farbe nach sich zieht. Eine derartige nachteilige Beeinflussung der Werkstoffeigenschaften sind im zu produzierenden Endprodukt unerwünscht.

Andere Kunststoffarten, z.B. Polyamide, sind nahe an bzw. an ihrem Schmelzpunkt oxidationsgefährdet, was ebenfalls die oben genannten Nachteile hinsichtlich der Werkstoff- bzw. Endprodukteigenschaften mit sich bringt.

Zur Vermeidung dieser Nachteile ist aus der EP 390 873 eine Vorrichtung zum Aufbereiten von thermoplastischem Kunststoffgut bekannt. Diese Vorrichtung weist einen Aufnahmebehälter auf, der oben durch eine Schleuse für einzubringendes Kunststoffgut zumindest im wesentlichen gasdicht abschließbar ist. Der Innenraum des Aufnahmebehälters steht zur Evakuierung bzw. zur Zuleitung von Schutzgas in diesen Innenraum mit zumindest einer Leitung an einer Stelle in Verbindung, die höher liegt als der höchste Füllstand im Aufnahmebehälter, wobei diese Leitung an eine Saugpumpe für gasförmige Medium bzw. an eine Pumpe für ein Schutzgas ausgeschlossen ist und an die Schleuse eine weitere zur Pumpe führende Leitung angeschlossen ist. Eine derartige Vorrichtung ermöglicht es, insbesondere Trocknung und Erwärmung, ohne Zersetzungsreaktionen des Polyesters zu gewährleisten. Der Aufnahmebehälter ist zweckmäßigerweise mit einem Schreddermesser, einem Rührflügel oder einem Balkenrührer versehen, welche ebenfalls gasdicht zum Behälterinnenraum hin abgedichtet sind. Außerdem ist die Zuführöffnung vom Schredder zum Extruderrylinder ebenfalls gasdicht ausgeführt. Diese Vorrichtung hat sich in der Praxis ebenfalls bewährt.

Für die Aufbereitung von Kunststoffgemischen ist in der WO 01/68345 eine weitere Möglichkeit beschrieben, nämlich ein Verfahren zum Spritzpressen von Kunststoffmisehungen, insbesondere Kunststoffmischungen, aufweisend mindestens eine Polyester- und zumindest eine Modifierkomponente, insbesondere deren Recyclate, beschrieben, sowie eine Vorrichtung zum Durchführen dieses Verfahrens, welches eine Verarbeitung derartiger Kunststoffmischungen unter weitgehender Beibehaltung der Werkstoffeigenschaften zulässt bzw. bekannte Verbesserungen der Werkstoffeigenschaften solcher Kunststoffmischungen in vollem Umfang nutzbar macht. Insbesondere wenn die Schmelzpunkte einer oder mehrerer der Modifierkomponenten in der Nähe der im Aufnahmebehälter herrschenden Trocknungstemperatur für die Polyesterkomponente liegen, werden dadurch allfällige Verbackungen bzw. Agglomeratbildungen in der Aufbereitungsvorrichtung verhindert.

Die thermoplastische Polyesterkomponente bzw. das PET-Gemisch wird im Ausgangszustand in einer Vorbehandlungsstation, analog zu der EP 390 873, erwärmt und getrocknet. Dann wird die erwärmte und getrocknete PET-Komponente einer Plastifizierungseinheit aufgegeben und zumindest eine Modifierkomponente zugemischt. Das Gemisch aus thermoplastischer Polyesterkomponente und Modifierkomponente wird in der Plasifizierungseinheit homogenisiert und als Schmelze in eine Einspritzeinheit ausgetragen und dann in ein geöffnetes Formwerkzeug eingespritzt.

*Aus dem Stand der Technik, beispielsweise aus der* WO 2006079128, der EP 321 742*, der* EP 1 273 412 *oder der* US 4,222,728 *sind weiters diverse Verfahren und Vorrichtungen bekannt, bei denen allerdings keine direkte und unmittelbare force-feeding Verbindung zwischen Schneidverdichter und Schneckenspritzgiessvorrichtung besteht.*

Die Verarbeitung eines Kunststoffmaterials in einer Spritzgussanlage hängt wesentlich von den verschiedenen Parametern bzw. Eigenschaften des der Spritzgussanlage zugeführten Materials ab, insbesondere von dessen Viskosität, Kristallinität, Molekuarabbau, Orientierung in der Oberflächenschicht, von allfälligen Anisotropien etc. All diese Parameter werden entscheidend durch die Art der Vorbereitung bzw. Aufbereitung des Materials vor der Plastifizierung bzw. vor dem Aufschmelzen beeinflusst. Aber auch die Art des Aufschmelzens und des Spritzvorganges nehmen Einfluss auf die schlussendliche Qualität des Endproduktes. In diesem Zusammenhang sind natürlich auch praktische und wirtschaftliche Aspekte, wie z.B. Zykluszeiten etc., zu berücksichtigen.

Insbesondere wenn es sich bei den auf diese Weise hergestellten Gegenständen nicht um Endprodukte handelt, sondern ihrerseits um Zwischenprodukte, die beispielsweise noch Formänderungen erfahren, z.B. um Preforms, ist eine hohe Qualität dieser Produkte vorteilhaft.

Aufgabe der vorliegenden Erfindung ist es somit, ein Verfahren zu schaffen, mit dem Kunststoffe mittels eines Spritzgussverfahrens schonend, effizient und kostengünstig zu hochwertigen End- oder Zwischenprodukten, beispielsweise zu Preforms, weiterverarbeitet werden können. Weiters soll eine dafür geeignete Vorrichtung geschaffen werden.

Diese Aufgabe wird in vorteilhafter Weise durch die kennzeichnenden Merkmale des Anspruchs 1 und des Anspruchs 8 gelöst.

Es hat sich dabei überraschenderweise gezeigt, dass es durch das erfindungsgemäße Verfahren und diese Vorrichtung ermöglicht wird, auch empfindliche oder instabile, insbesondere hygroskopische, Kunststoffe oder Kunststoffe mit erhöhtem Feuchtigkeitsgehalt schonend zu bearbeiten. Außerdem können auch zu recyclierende Kunststoffe, insbesondere Polymilchsäure PLA, unabhängig von deren Art, Form und Zusammensetzung, getrocknet und gegebenenfalls in einem Schritt gleichzeitig kristallisiert werden. Weiters können Kunststoffe einer raschen und möglichst energiesparenden Recyclierung unterzogen werden, wobei die recyclierten, wiedergewonnen durch Spritzguss hergestellten Endprodukte bzw. Gegenstände hohe Werte für die Viskosität aufweisen und insbesondere eine Viskosität aufweisen, die mit den Viskositätswerten des zu recydierenden Gutes vergleichbar sind. Weiters können mit diesem Verfahren auch, insbesondere mit verdampfbaren Substanzen, stark verschmutzte bzw. kontaminierte bzw. stark bedruckte Kunststoffe verarbeitet werden, ohne die mechanischen Eigenschaften des Kunststoffes und/oder dessen Schmelzeeigenschaften negativ zu beeinflussen. Die recyclierten, wiedergewonnen Kunststoffe bzw. die erzielte Kunststoffschmelze bzw. die aus der Schmelze hergestellten Spritzgussprodukte sind lebensmittelecht, d.h. genügen den lebensmitteitechnischen Vorschriften, haben die Tauglichkeit für den Einsatz für Lebensmittel bzw. sind gemäß dem europäischem ILSI-Dokument oder der FDA zertifiziert. In dem aufgegebenen RohMaterial enthaltene Schadstoffe, Migrationsprodukte bzw. Kontaminierungen werden durch das Verfahren somit möglichst weitgehend abgeschieden.

Durch das vorteilhafte Verfahren sind somit Produkte, insbesondere Preforms, mit hochwertigen Eigenschaften erhältlich und das mittels einer konstruktiv einfachen und schnellarbeitenden Vorrichtung.

Das erfindungsgemäße Verfahren verläuft zweistufig und umfasst zuerst eine Vorbahandlung, bzw. Aufarbeitung des thermoplastischen Ausgangsmaterials und danach dessen Weiterverarbeitung in einer Spritzgussvorrichtung (injection molding). Vereinfacht gesagt, wird ein besonderer Aufbereitungsbehälter, in dem das Ausgangsmaterial vorbehandelt wird, an eine besonders ausgestaltete Spritzgussmaschine angeschlossen, wodurch nur besonders vorbereitetes Material mit besonderen Eigenschaften in die Spritzgussmaschine gelangt und dort aufgeschmolzen und zu Formen gespritzt wird.

Der erste Schritt der Vorbehandlung, Aufarbeitung bzw. Recyclierung des thermoplastischen Kunststoffmaterials in all seinen vorteilhaften Ausgestaltungen wird üblicherweise in einem Aufnahmebehälter bzw. Reaktor durchgeführt. Das zu behandelnde Kunststoffmaterial wird in diesem Aufnahmebehälter bzw. Reaktor vorgelegt und unter ständiger Mischung bzw. Bewegung und/oder Zerkleinerung bei erhöhter Temperatur behandeit.

Zur Mischung und Erwärmung des Kunststoffmaterials ist im Reaktor zumindest ein. gegebenenfalls auf mehreren übereinanderliegenden Ebenen angeordnetes, um eine vertikale Achse drehbares Zerkleinerungs- bzw. Mischwerkzeug, mit auf das Gut zerkleinernd und/oder mischend einwirkenden Arbeitskanten, angeordnet. Durch diese Zerklelnerungs- bzw. Mischwerkzeuge wird das Polymermaterial mit mechanischer Energie beaufschlagt, wodurch eine Erwärmung und eine gleichzeitige Mischung und Bewegung des Polymer-Materials erfolgt. Die Erwärmung erfolgt dabei durch Umwandlung der beaufschlagten mechanischen Energie.

Die milde, aber stetige Bewegung des Polymer-Materials ist vorteilhaft. Dadurch wird das Verklumpen bzw. Verkleben des Materials im kritischen Temperaturbereich verhindert, bis eine ausreichende Kristallisierung der Oberfläche der Teilchen das Zusammenkleben der einzelnen Teilchen selbst verhindert. Außerdem ist durch die Bewegung eine höhere Prozesstemperatur möglich. Im Behandlungsbehälter wird bei der milden und stetigen Bewegung neben dem Hintanhalten von Verklebungen gleichzeitig dafür gesorgt, dass die Temperatur im Behälter ausreichend hoch wird bzw. bleibt und jedes Teilchen schonend auf die entsprechende Temperatur erwärmt wird bzw. beibehält. Gleichzeitig wird durch die Bewegung eine Ablösung der migrierenden Moleküle von der Oberfläche der Teilchen unterstützt. Zu diesem Zwecke kommen vorteilhafterweise Werkzeuge auf unterschiedlichen Ebenen bei kontinuierlichen Prozessen bzw. Mischwerkzeuge bei Batch-Prozessen zum Einsatz.

Derartige Reaktoren werden auch in der Praxis eingesetzt und sind beispielsweise als "EREMA Kunststoff Recycling System PC" oder als "ein- oder zweistufige VACUREMA-Anlagen" bekannt.

Die Aufarbeitung erfolgt bei einer Temperatur unterhalb der Schmelztemperatur und vorzugsweise über der Glasübergangstemperatur, des Kunststoffmaterials, wobei das Polymermaterial gleichmäßig und stetig bewegt und durchmischt wird. Dadurch wird das Kunststoffmaterial in einem Schritt kristallisiert, getrocknet und gereinigt.

Als zu behandelnde Kunststoffmaterialien werden vor allem Polymilchsäure (PLA), High Density Polyethylen (HDPE), Low Density Polyethylen (LDPE), Polypropylen (PP), Polycarbonat (PC), Polystyrol (PS), Polyethylennaphthalat (PEN), Polyamide (PA), Polylimid (PI), Polyhydroxyalkalinsäure (PHA), Styrol-Copolymere, wie beispielsweise Acrylnitril-Butadien-Styrol (ABS), Styrol-Acrylnitril (SAN), Polymethylmethacrylat (PMMA) und/oder Blokunststoffe, insbesondere auf Stärkebasis, bzw. Stärkeblends eingesetzt Auch Mischungen dieser Kunststoffmaterialien, beispielsweise PET/PE, PET/PA bzw. PP/PA, werden eingesetzt.

Das Kunststoffmaterial liegt üblicherweise in Form von zumindest teilweise kristallisiertem oder nicht kristallisiertern bzw. amorphem Granulat, als Neuware oder als Regenerat vor. Es kann aber auch in Form eher amorpher, zerkleinerter Folienabfälle, insbesondere aus Tiefziehapplikationen, mit einer Dicke von insbesondere zwischen 100 µm bis 2 mm, in Form von dünnen Folienabfällen aus Verstreckungsanlagen mit einer Dicke von insbesondere zwischen 5 µm - 100 µm und/oder in Form von Faser- und Vliesabfällen vorliegen. Außerdem kann das Kunststoffmaterial in Form von Flaschenabfällen oder Spritzgussabfällen vorliegen.

Die genauen Verfahrensparameter, insbesondere die Temperatur richten sich nach der Form und Dicke des Materials und natürlich nach der Art des Polymers selbst.

Das Verfahren wird für stückiges Polymergut, insbesondere in Form von Granulaten, Flakes od. dgl. vorzugsweise in einem einstufigen VACUREMA Reaktor durchgeführt. Ein derartiger Reaktor weist die oben angeführten Merkmale auf und kann mit Vakuum beaufschlagt werden.

Für Polymergut in Form von dünnen Folien, Faser oder Vliesen wird das Verfahren vorteilhafterweise in einem einstufigen EREMA PC Reaktor durchgeführt. Hierbei reicht es oft auch aus, wenn das Verfahren unter Umgebungsdruck, also ohne Vakuum, ausgeführt wird. Der Reaktor weist ebenfalls die oben angeführten Merkmale auf.

Das Verfahren kann auch zweistufig geführt werden. So kann beispielsweise eine Mischung aus kristallisierten und nichlkristallisierten Granulaten oder Flakes als zu reinigendes Material im Kristallisationstrockner eines zweistufigen VACUREMA Reaktors vorgelegt werden. Im vorgeschalteten Kristallisationstrockner sind um eine vertikale Achse rotierende Zerkleinerungs- bzw. Mischwerkzeuge angeordnet, die mit auf das Gut zerkleinernd und/oder mischend einwirkenden Arbeitskanten ausgestattet sind. Durch diese Zerkleinerungs- bzw. Mischwerkzeuge wird das Material mit mechanischer Energie beaufschlagt, wodurch eine Vorwärmung des Materials und eine gleichzeitige Mischung und Bewegung des Materials erfolgt. Anschließend wird das vorgewärmte, vorgetrocknete, vorkristallisierte Material der Hauptbehandlung unterzogen.

Um den ersten Schritt des erfindungsgemäßen Verfahrens in vorteilhafter Weise durchführen zu können, kann beispielsweise eine Vorrichtung eingesetzt werden, die einen Behälter für das zu bearbeitende Kunststoffgut aufweist, dem dieses Gut durch eine Einbringöffnung zugeführt und aus dem das Gut durch zumindest eine an die Seitenwand des Behälters angeschlossene Schnecke ausgebracht wird, wobei im Bodenbereich des Behälters zumindest ein um eine vertikale Achse drehbares, mit auf das Gut zerkleinernd und bzw. oder mischend einwirkenden Arbeitskanten versehenes, Werkzeug angeordnet ist und die Einzugsöffnung der Schnecke zumindest annähernd auf der Höhe des Werkzeuges liegt, und vorzugsweise mit zumindest einer an den Behälter angeschlossenen Leitung zur Erzeugung eines Vakuums und bzw. oder zur Begasung im Behälterinnenraum, versehen ist. Eine solche Vorrichtung ist beispielsweise als VACUREMA Reaktor oder als EREMA PC Reaktor verwirklicht.

Eine derartige Verfahrensführung ist im allgemeinen befriedigend, auch bei der Verarbeitung solcher Kunststoffsorten, die empfindlich auf Luftsauerstoff und/oder Feuchtigkeit sind, da durch Evakuierung des Behälters bzw. durch Einführung eines Schutzgases in das Behälterinnere das Kunststoffmaterial gegen diese schädlichen Einflüsse geschützt werden kann.

Es hat sich jedoch gezeigt, dass in manchen Fällen der Homogenisierungsgrad des in die Schnecke abgeführten Kunststoffmateriales nicht ausreichend ist, insbesondere in Bezug auf den erzielten Trocknungsgrad solcher Kunststoffmaterialien, die zur Vermeidung von Degradierung bereits vor der Plastifizierung völlig trocken sein müssen.

Folien größerer Stärke erfordern einen mit der Dicke zunehmenden gesteigerten Trockenaufwand, wodurch für derartiges Gut gesonderte Trockenvorgänge, z.B. mit dehydrierter Luft, in speziellen Trocknern notwendig sind. Diese Trockner arbeiten darüber hinaus in einem Temperaturbereich, für den nur kristallisiertes Gut zulässig ist. amorphes Gut würde klebrig werden und dadurch zusammenbacken.

Dies bedeutet, dass dem Trockenvorgang ein Kristallisiervorgang vorgeschaltet werden muss. Wird aber das zu bearbeitende Gut im Behälter durch das Werkzeug lange bearbeitet, dann besteht insbesondere bei kontinuierlichem Betrieb der Vorrichtung die Gefahr, dass einzelne Kunststoffteilchen schon sehr früh von der Austragsschnecke erfasst werden, andere Kunststoffteilchen jedoch erst sehr spät. Die früherfassten Kunststoffteilchen können noch verhältnismäßig kalt und daher nicht ausreichend vorbehandelt sein, wodurch Inhomogenitäten im der Spritzgussanlage zugeführten Material entstehen.

Um dies zu vermeiden und die Homogenität des ausgetragenen Materiales wesentlich zu verbessern, kann das erfindungsgemäße Verfahren in einer weiteren Vorrichtung geführt werden, bei der an die Einbringöffnung des Hauptbehälters die Ausbringöffnung zumindest eines weiteren Behälters angeschlossen ist, in welchem gleichfalls zumindest ein um eine vertikale Achse umlaufendes Werkzeug im Bodenbereich des Behälters vorgesehen ist. Es sind also zwei oder mehr Behälter in Serie angeordnet und das zu verarbeitende Kunststoffmaterial muss diese Behälter der Reihe nach durchlaufen. Im ersten Behälter wird bereits vorzerkleinertes, vorgewärmtes, vorgetrocknetes und vorverdichtetes und somit vorhomogenisiertes Material erzeugt, welches dem folgenden Behälter vorgelegt wird. Dadurch wird sichergestellt, dass kein unbehandelles, d.h. kaltes, unverdichtetes, unzerkleinertes bzw. inhomogenes, Material direkt der Austragsschnecke bzw. in die Spritzgussanlage bzw. über die Austragsschnecke dem angeschlossenen Extruder od. dgl. zugeht.

Hierbei werden diese Vorteile auch dann gewährt, wenn im zweiten und bzw. oder einem folgenden Behälter eine Vakuum- oder Schutzgasbehandlung des thermoplastischen Kunststoffgutes stattfindet. Der Überströmquerschnitt ist in der Regel gering und der Druckausgleich wird durch den Materialtransport stark gedrosselt. Zudem deckt die im vorgeschalteten Behälter gebildete Mischthrombe die Austragöffnung dieses Behälters ab und wirkt daher ebenfalls bis zu gewissem Grad dichtend.

Die Verhältnisse werden dann besonders günstig, wenn die Ausbringöffnung des weiteren Behälters, also des vorgeschalteten Behälters, zumindest annähernd auf der Höhe des Werkzeuges in diesem Behälter liegt, also im Bodenbereich des Behälters. Das in diesem Behalter umlaufende Werkzeug fördert dann durch Zentrifugalkraft in die Ausbringöffnung hinein, sodass der Überströmquerschnitt mit Material stets gut gefüllt ist.

Gemäß einer vorteilhaften Weiterbildung ist die Ausbringöffnung mit der Einbringöffnung mittels eines Rohrstutzens verbunden, in welchem ein Absperrorgan angeordnet ist. Dadurch lässt sich eine völlige Dichtung zwischen den beiden Behältern erzielen, sodass Vakuum- oder Schutzgasverluste völlig vermieden sind. Im einfachsten Fall kann dieses Absperrorgan erfindungsgemäß, ein Schleber sein, welcher geschlossen wird, sobald die Vakuumbehandlung bzw, die Begasung im nachgeschalteten Behälter erfolgt. Dadurch wird allerdings kein völlig kontinuierlicher Betrieb mehr möglich. Ist jedoch gemäß einer bevorzugten Ausführungsform der Erfindung das Absperrorgan eine Schleuse, insbesondere eine Zellenradschleuse, so wird die erwähnte Dichtung zwischen den beiden Behältern aufrechterhalten und dennoch ein kontinulerlicher Betrieb möglich. Die Zellen der Schleuse können in an sich bekannter Weise ebenfalls begast oder evakuiert werden.

Das im nachgeschalteten Behälter gebildete Vakuum unterstützt die Einsaugung des zu bearbeitenden Gutes aus dem vorgeschalteten Behälter. Bei solchen Anlagen können daher in der Regel die Behälter auf gleicher Höhe angeordnet werden. Will man jedoch die Befüllung des nachgeschalteten Behälters durch Schwerkrafteinfluss verbessern, so kann gemäß einer Weiterbildung der Erfindung die Anordnung so getroffen sein, dass der in Fließrichtung des Gutes vorgeschaltete Behälter höher liegt als der folgende Behälter. Letzterer kann daher auch im Mittelbereich oder im oberen Bereich seiner Seitenwand und gegebenenfalls auch durch den Deckel von oben her beschickt werden.

Dieser erste Verfahrensschritt kann, wie beschrieben, in vorteilhafter Weise in einer entsprechend dafür ausgestalteten Vorrichtung, auch zweistufig geführt werden. Bei dieser Verfahrensführung erfolgt eine zweistufige Behandlung des anfallenden bzw. aufgegebenen Gutes, wobei im Zuge der Vorbehandlung in der Vorbehandlungseinrichtung keine Plastifizierung des Gutes, jedoch eine Kristallisierung und/oder eine gewisse Vorverdichtung bei gleichzeitiger Trocknung erfolgt. Die Vorverdichtung wird bei entsprechender Temperatur durch mechanische Beaufschlagung bzw. Energieeinbringung in das Gut bewirkt. Insbesondere erfolgt die Erhöhung bzw. Einstellung der Temperatur durch die mechanische Beaufschlagung des Gutes bzw. durch Umwandlung der Rotationsanergie zumindest eines Misch- und/oder Zerkleinerungselementes in thermische Energie aufgrund der auftretenden Reibungsverluste.

Im Zuge der Hauptbehandlung in der Hauptbehandlungseinrichtung wird das Gut bei erhöhter Temperatur weiter getrocknet, entgiftet und wenn nötig kristallisiert und unter hohem Vakuum für eine bestimmte mittlere Verweilzeit gehalten. Wiederum erfolgt eine mechanische Beaufschlagung bzw. Materialverdichtung und Einbringung von Energie mittels zumindest eines Misch- bzw. Zerkleinerungselementes, das aufgrund seiner Rotation die entsprechende thermische Energie in das Gut einbringt und dieses weiter erwärmt.

Die Hauptbehandlung, die unter Vakuum erfolgt, verringert die Restfeuchte auf einen vorgegebenen bestimmten mittleren Wert und bewirkt auch, dass flüchtige Schadstoffe aus dem Gut abgeschieden werden.

Die Temperatur bei der Hauptbehandlung wird unter der Schmelztemperatur des Gutes gehalten. Es ist jedoch anzustreben, diese Temperatur möglichst hoch anzusetzen.

*Vorrichtungen, wie in den Druckschriften* EP 123 771, EP 390 873, AT 396 900, AT 407 235, AT 407 970, AT 411 682, AT 411 235, AT 413 965, AT 413 673 *oder* AT 501 154 *beschrieben,* werden auch in der Praxis eingesetzt und sind beispielsweise als "EREMA Kunststoff Recycling System PC* oder als ein- oder zweistufige VACUREMA-Anlagen" bekannt.

Nach der Aufbereitung bzw. Vorbehandlung des Kunststoffmaterials erfolgt als zweite Verfahrensstufe des erfindungsgemäßen Verfahrens die Plastifizierung des aus dem Behandlungsbehälter abgeführten Kunststoffmaterials sowie das Spritzgießen in der Spritzgussvorrichtung.

Die Plastifizierung erfolgt mittels eines direkt an die Hauptbehandlungseinrichtung bzw. den Schneidverdichter angeschlossenen Extruders der Spritzgussanlage. Aufgrund des direkten, vakuumdichten Anschlusses kann das Vakuum in der Hauptbehandlungseinrichtung in den Eingangsbereich des Extruders hineinwirken. Der Extruder weist oft eine Plastifizierzone auf, an die sich eine Kompressions- und Stauzone anschließt. An diese Stauzone kann sich eine Entgasungs- bzw. Evakuierzone anschließen, in welcher mit Vakuum, insbesondere Hochvakuum, flüchtige Substanzen aus der Schmelze abgesaugt werden. Es kann dabei eine ein- oder mehrstufige Entgasung vorgesehen werden; es können auch mehrere Kompressions- und Dekompressionszonen mit unterschiedlichem Vakuum aufeinanderfolgend angeordnet werden. Damit können auch hartnäckige bzw. schwer verdampfbare Kontaminationen ausgedampft werden.

Durch entsprechende Wahl der Temperaturen und der Verweilzeiten in der Vorbehandlung und in der Hauptbehandlung können der Viskositätswert der dem Extruder entnommenen Schmelze und der aus der Schmelze hergestellten Spritzguss-Produkte eingestellt werden. Durch entsprechend lange Verweilzeiten und entsprechende hohe Temperaturen im Vakuum wird ein positiver Einfluss auf die Viskosität ausgeübt bzw. es erfolgt eine Repolymerisation.

Spritzgießmaschinen sind als Kolbenspritzgießmaschinen, Schneckenkolbenspritzgießmaschinen oder als Schneckenspritzgießmaschinen bekannt. Bis 1956 wurden hauptsächlich Kolbenspritzgießmaschinen verwendet. Die heute übliche Schneckenkolbenspritzgießmaschine zieht meist Kunststoffe in Form eines Granulats aus einem Trichter in die Schneckengänge ein, zerteilt und schert sie. Die dadurch entstehende Friktionswärme sorgt in Verbindung mit der vom beheizten Zylinder zugeführten Wärme für eine relativ homogene Schmelze. Diese sammelt sich vor der Spitze der zurückweichenden Schnecke. In der Einspritzphase wird die Schnecke rückseitig hydraulisch oder durch mechanische Kraft unter Druck gesetzt. Dabei wird die Schmelze unter hohem Druck (meist zwischen 500 und 2000 bar) - im Unterschied zum Spritzpressen - durch die Rückstromsperre, die ans Spritzgießwerkzeug angedrückte Düse, ggf. ein Heißkanalsystem (bei modernen Serienwerkzeugen üblich) und den Angusskanal in den formgebenden Hohlraum des temperierten Spritzgießwerkzeugs gedrückt. Ein reduzierter Druck wirkt als Nachdruck noch so lange auf die Schmelze, bis die Anbindung (Anguss) erstarrt (eingefroren) ist. Dadurch wird die beim Abkühlen entstehende Volumenschwindung weitgehend ausgeglichen. Durch diese Maßnahme wird die Maßhaltigkeit und die gewünschte Oberflächenqualität erreicht. Danach beginnt die Rotation der Schnecke. Während auf diese Weise die Schussmasse für das folgende Formteil aufbereitet wird, kann das Formteil im Werkzeug noch abkühlen bis die Seele (flüssiger Kern) erstarrt ist. Das Werkzeug öffnet und wirft das fertige Formteil aus.

Die Plastifizierung des Granulates durch die Drehbewegung der Schnecke, - gegebenenfalls unterstützt durch die äußeren Heizbänder - gewährleistet eine sehr homogene Temperaturverteilung. Das Einspritzen erfolgt, wie gesagt, durch axiale Bewegung der Schnecke selbst. Dadurch übernimmt die Schnecke auch die Funktion eines Kolbens. Vorteilhaft sind die hohe Qualität der Formteile, die kurze Zykluszeit und die Möglichkeit große Formteile herzustellen.

Die Schließeinheit muss das geteilte Spritzgießwerkzeug gegen die Wirkung des Spritz- und Nachdruckes zuhalten. Nach Ablauf der Restkühlzeit muss sie die Form öffnen und nach Ausstoß des fertigen Formteils wieder schließen. Die Schließeinheit enthält meist Hilfseinrichtungen (Auswerfer) zur besseren Entformung des Fertigteils.

Über die Steuerung werden alle relevanten Verarbeitungsparameter eingestellt. Gleichzeitig übernimmt sie die gesamte Prozessüberwachung während der im Automatikbetrieb stattfindenden Fertigung.

Der Verfahrensablauf beim Spritzgießen lässt sich im wesentlichen einteilen in:
- Dosier- und Plastifiziervorgang
- Einspritzen und Nachdrücken bis zum Siegelpunkt
- Abkühlvorgang
- Entformungsvorgang

Das Einspritzen der Schmelze erfolgt durch den meist hydraulischen Vorschub der Schnecke, die vor der Düse eine ringförmige Rückstromsperre aufweist, sodass die Schmelze nicht aufgrund des Gegendruckes zurück in die Schneckenkanäle gedrückt werden kann. Diese Vorschubgeschwindigkeit wird geregelt, woraus sich ein bestimmter Schmelzestrom "Einspritzstrom" ergibt. Der Einspritzstrom kann meist in mehreren Abschnitten unterschiedlich hoch eingestellt werden, wodurch sich das "Einspritzstromprofil" ergibt.

Prinzipiell wird die Schmelze so schnell wie zulässig in das Formnest eingespritzt, wobei der Einspritzstrom allerdings in Grenzen gehalten werden muss, um Materialschädigungen zu vermeiden. Überschlägig lässt sich - je nach Viskosität der Schmelze - für bestimmte Spritzvolumina aus dem idealen Einstritzstrom eine zugehörige Formfüllzeit berechnen, die in Tabellenform vorgegeben wird und als Kontrollwert im konkreten Fall herangezogen wird.

Dieser Einspritzstrom lässt sich nur realisieren, wenn ausreichender Hydraulikdruck aufgebracht wird. Der Hydraulikdruck soll aus Gründen der Schonung der Regelventile so gering wie möglich gehalten werden, aber natürlich ausreichen, um den vorgegebene Einspritzstrom zu realisieren.

Die in die Form einspritzte Schmelze kühlt sich im Werkzeug schnell ab und erfährt dabei eine Volumenschwindung, die durch den Nachdruck weitestgehend ausgeglichen werden soll. Der hierfür erforderliche Druck soll allerdings nicht zu unnötig hohen Eigenspannungen im Bauteil führen. Auch soll durch rechtzeitiges Umschalten von Einspritzdruck auf Nachdruck (bei ca. 98 % iger Formfüllung) ein Überspritzen verhindert werden. Wenn nämlich der volle Einspritzdruck im Werkzeug wirksam wird, kommt es zu hohen Belastungen von Werkzeug und Schließeinheit, die dazu führen können, dass die Trennebene sich durch den überhöhten Innendruck etwas öffnet, und Schmelze in den Zwischenraum eintritt ("Überspritzung", Bildung von "Schwimmhäuten").

Durch die kontinuierliche Abkühlung der Schmelze Im Werkzeug kommt es an dünnwandigen Stellen, insbesondere am Anspritzpunkt, irgendwann zum Einfrieren der Schmelze, sodass durch den Nachdruck keine weitere Schmelze mehr in die Kavität transportiert werden kann. Zu diesem Zeitpunkt kann der Nachdruck abgeschaltet werden.

Wenn sich das Formteilgewicht nicht mehr ändert, Ist der Siegelpunkt, d.h. die maximal erforderliche Nachdruckzeit und/oder der erforderliche Nachdruck erreicht. Um Eigenspannungen zu vermeiden, wird günstigenfalls kein konstanter Nachdruck aufgebracht, sondern ein Nachdruckprofil, das ausgehend vom höchsten Nachdruck in zwei oder drei Stufen emiedrigt wird.

Die eingespritzte Schmelze wird im Schneckenvorraum, vor der Rückstromsperre, bereitgestellt. In der Spritzeinheit erfolgt die Plastifizierung des Granulates durch eine Kombination von Wärmekonvektion über die beheizten Zylinderwände und die Friktionswärme, die bei der Schneckendrehung erzeugt wird. Die Schneckendrehung führt zu einem Transport der aufschmelzenden Masse in diesen Schneckenvorraum, wobei sich die Schnecke in dem Maße durch den entstehenden Druck im Schneckenvorraum zurückzieht, wie dieser durch den Transport aufgebaut wird.

Dabei lässt sich die Homogenisierung der Schmelze durch eine erhöhte Schneckenfriktion verbessern, beispielsweise unter Wirkung eines Gegendruckes ("Staudruck"), der auf die Schnecke aufgebracht wird oder durch eine Erhöhung der Schneckendrehzahl (Umfangsgeschwindigkeit).

Eine zu hohe Schneckenfriktion führt zu einer mechanischen Belastung der Schmelze, die zum Abbau des Kunststoffs führen kann, und muss daher begrenzt werden. Als Richtwert wird eine maximale Umfangsgeschwindigkeit von 0,2 bis 0,3 m/s angegeben. Falls die Umfangsgeschwindigkeit nicht direkt in die Maschinensteuerung eingegeben werden kann, lässt sich die zugehörige Schneckendrehzahl aus Abbildung 14 ablesen.

Zur Unterstützung der gleichmäßigen Aufschmelzung wird üblicherweise ein Druck von 40 bis 150 bar eingesetzt. Bei kürzeren Schnecken (L/D-Verhältnis ist entscheidend) muss der Staudruck etwas höher gewählt werden, als bei längeren Schnecken, die von vornherein eine gleichmäßigere Erwärmung und Homogenisierung erlauben. Übliche Schnecken haben ein UD Verhältnis zwischen 18 und 22.

Für die Entformung des Spritzlings muss dieser ausreichend abgekühlt sein. Entformungstemperaturen sind werkstoffabhängig und werden vom Materiallieferanten vorgegeben. Auf jeden Fall darf nach Entformung kein nachträglicher Verzug oder plastische Verformung der Teile z.B. durch Auswerferstifte auftreten.

Die hierfür erforderliche Abkühlzeit setzt sich zusammen aus der Dosierzeit und der Restkühlzeit. Idealerweise reicht die Dosierzeit zur Abkühlung auf Entformungstemperatur aus. Oftmals muss jedoch zusätzlich eine Restkühlzeit vorgesehen werden, die die Zykluszeit entsprechend verlängert. Wesentlich für die Abkühlzeit sind die Werkzeugtemperatur, die Massetemperatur beim Einspritzen, das Werkzeugmaterial (thermische Leitfähigkeit), der Kunststofftyp (thermische Leitfähigkeit und Wärmeübergang) bzw. die Wanddicke des Spritzlings. Den größten Einfluss hat i. A. die Wanddicke. Die Abkühlzeit lässt sich in Abhängigkeit von der Wanddicke für ein bestimmtes Material aus Diagrammen des Materialherstellers ablesen.

Durch die vorliegenden vorteilhafte Kombination dieser beiden besonderen Verfahrensschritte bzw. der Aneinanderkopplung der beiden besonders ausgestalteten Vorrichtungen lassen sich auf einfache Weise hochwertige Produkte erhalten.

*Erfindungsgemäß ist ein* kontinuierlich arbeitende Schneidverdichter mit einer diskontinuierlich arbeitenden axialen Schneckenspritzgießvorrichtung *kombiniert*, wobei der Schneidverdichter direkt, unmittelbar und ohne Zwischenstufe an die Spritzgussvorrichtung angeschlossen ist.

Bei einer Aufbereitung von Kunststoffmaterial, bei der, wie im erfindungsgemäßen Fall, das Material nicht nur locker gemischt wird, sondern auch erwärmt wird und, wie in Anspruch 1 vorgesehen, in einen klebrig erweichten, aber dennoch stückigen Zustand gebracht wird, kann das auf diese Weise vorbehandelte Polymermaterial nicht über einen offenen Trichter lose bzw. freifließend in die Schneckenspritzgusseinheit eingebracht werden. Gerade bei Schneckenspritzgussanlagen ist die Fütterung kritisch, u.a. für eine optimale Verfahrensführung, da auf diese Weise vorbehandelte Kunststoffmaterialien eine erhöhte Packungsdichte gegenüber nicht vorbehandelten Flakes aufweisen.

Es ist somit erforderlich, das vorbereitete und aufbereitete Polymermaterial vom Schneidverdichter direkt und unmittelbar mittels force-feeding in den Einzugsbereich der Schneckenspritzgussvorrichtung einzubringen bzw. hineinzudrücken, um den gewünschten Füllgrad zu erreichen. Dadurch ist es einerseits möglich, auch empfindliche oder instabile, beispielsweise hygroskopische Kunststoffe oder Kunststoffe mit erhöhtem Feuchtigkeitsgehalt schonend und unter Erhaltung der Qualität zu bearbeiten, da gerade in diesem erweichten und erwärmten Zustand die stückigen Kunststoffteilchen mit erhöhter Oberfläche sehr anfällig gegen Oxidation bzw. hydrolytische Zersetzungsprozesse sind.

Durch dieses force-feeding bzw. die direkte unmittelbare Kombination bzw. den direkten und unmittelbaren Anschluss des Schneidverdichters an die Spritzgussvorrichtung wird das aufbereitete Material, durch die von den Mischwerkzeugen hervorgerufene Bewegung im Schneidverdichter, in Richtung der Spritzgussvorrichtung gezwungen, wodurch ein höherer Füllgrad im Einzugsbereich des Spritzgussgehäuses erzielt wird, da die erweichten Flakes eine höhere Packungsdichte haben als nicht vorbehandelte Flakes. Dies hat einerseits zur Folge, dass die Schnecke des Spritzgussapparates kürzer ausgebildet sein kann, wodurch auch die Zykluszeiten des Spritzgießens kürzer werden und wodurch in weiterer Folge der ganze Ablauf schneller vonstatten gehen kann.

In erster Linie werden derartige Kombinationsvorrichtungen in der Praxis zur Herstellung von neuen PET-Flaschen aus alten PET-Flaschen eingesetzt. Der Vorgang läuft in etwa so ab, dass die gebrauchten, zu rezyklierenden PET-Flaschen angeliefert werden, gegebenenfalls vorab grundgereinigt werden und anschließend in den Schneidverdichter verbracht werden. Um einerseits Kontaminationen bzw. störende Gerüche etc. aus dem Material zu entfernen und andererseits die Qualität des PET-Materials, das bekanntlich sensibel gegen Feuchtigkeit ist, zu erhalten oder gegebenenfalls durch Viskositätserhöhung sogar noch zu verbessern, ist eine entsprechende besondere Aufarbeitung bzw. Aufbereitung unerlässlich. Ein einfaches Mischen und Zerkleinern der PET-Flaschen reicht in der Regel nicht Im Zuge der Aufbereitung wird u.a. die Temperatur erhöht und die Polymerpartikel werden in einen erweichten, aber dennoch stückigen Zustand gebracht und für eine bestimmte Verweilzeit in diesem Zustand gehalten. Erst dadurch kann gewährleistet werden, dass, wie oben erwähnt, das schlussendlich resultierende Produkt lebensmittelecht ist und den qualitativen Anforderungen entspricht.

Gerade bei der Herstellung von Massengütern wie PET-Flaschen oder dergleichen ist die zu erreichende Herstellungszeit pro Flasche wesentlich für die Effizienz der Anlage. Die Herstellungszeit von PET-Flaschen bewegt sich bei Standardanlagen im Bereich von etwa 8 bis 10 Sekunden pro Flasche. Derartige PET-Flaschen werden, wie erwähnt, häufig durch Spritzgussverfahren hergestellt.

Durch die erfindungsgemäße Kombinationsanlage ist es nunmehr möglich, die für eine Flasche erforderliche Herstellungszeit um etwas mehr als 2 Sekunden zu senken, was eine Zeitersparnis von gut 20 % bedeutet. Gerade bei Massengütem sind auch geringe Verfahrensbeschleunigungen wesentlich und führen zu wesentlichen Verbilligungen.

Weitere vorteilhafte Verfahrensführungen sowie vorteilhafte Ausgestaltungen der Vorrichtung sind in den abhängigen Ansprüchen beschrieben.

Dadurch, dass die Schnecke die sich in einem Stauraum vor der Düse angesammelte Schmelze durch ihre axiale Verschiebung direkt unter hohem Druck in eine Spritzgussform einspritzt bzw. dass die Schnecke als (hoch)druckerzeugender Kolben für die Schmelze wirkt bzw. ausgestaltet ist wird ein kostengünstiges und einfaches Verfahren bzw. eine kostengünstige und einfache Vorrichtung geschaffen.

Dadurch, dass die Schnecke die Schmelze durch ihre axiale Verschiebung mit geringerem Druck in einen vom Gehäuse räumlich getrennten, aber mit diesem in Fluidverbindung stehenden, Shooting pot presst bzw. die Schmelze von dort über einen, insbesondere von der Schnecke unabhängig zuschaltbaren, Kolben unter hohem Druck in eine Spritzgussform eingespritzt wird, bzw. durch eine derartige Vorrichtung mit einem baulich getrennten Shooting pot wird der Durchsatz durch Verkürzung der Zykluszeit erhöht.

Dadurch, dass alle Bearbeitungsschritte bzw. die Vorbehandlung bzw. Aufbereitung und/oder die Überführung und/oder das Spritzgießen des Materials unter Vakuum oder Schutzgas erfolgen, kann ein oxidativer oder hydrolytischer Abbau verhindert werden.

In diesem Zusammenhang ist es besonders vorteilhaft, baulich einfach vorzusehen, dass das Gehäuse eine Einzugsöffnung aufweist, mit der es an eine Austragöffnung des Aufnahmebehälters, beispielsweise radial oder tangential, direkt, vorzugsweise gas- bzw. vakuumdicht, angeschlossen ist, wobei die Austragsöffnung vorzugsweise in der Seitenwand nahe der Bodenfläche des Aufnahmebehälters, insbesondere in der Höhe der Mischwerkzeugs, angeordnet ist.

Außerdem ist es vorteilhaft, Insbesondere zwischen der Schnecke und der Spritzgussform, zumindest einen Schmelzefilter vorzusehen und/oder dass die Schneckenspritzgießvonichtung eine Rücklaufsperre, insbesondere in Form eines zwischen dem Shooting-Pot und der Schnecke und/oder im Kanal angeordneten Rückschlagventils, umfasst.

Die Erfindung wird beispielhaft ohne Einschränkung durch folgende vorteilhafte Ausführungsformen beschrieben:
Fig. 1 zeigt eine erste Ausführungsform der erfindungsgemäßen Vorrichtung ohne shooting pot
Fig. 2 zeigt eine zweite Ausführungsform der erfindungsgemäßen Vorrichtung mit shooting pot

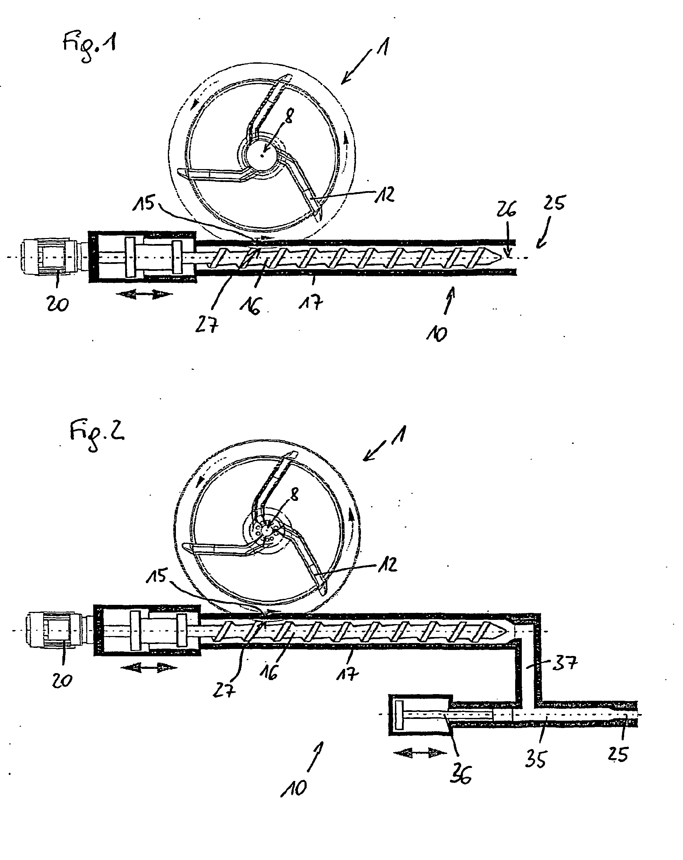

Die Vorrichtung gemäß Fig. 1 umfasst im wesentlichen einen Reaktor bzw. Schneidverdichter 1 und eine an diesen direkt, insbesondere vakuumdicht, angeschlossene, zum Teil dargestellte - ebenfalls zuvor im Detail beschriebene - Schneckenspritzgießvorrichtung 10. Durch diese vorteilhafte Kombination können aus Kunststoffmaterialien z.B. aus PET-Materialien, z.B. aus Flakes, Preforms hergestellt werden.

Zur Mischung und Erwärmung des Kunststoffmaterials ist im Reaktor 1 - dieser Reaktor bzw. Schneidverdichter 1 und dessen Wirkungsweise wurde bereits zuvor im Detail beschrieben, worauf hier verwiesen wird - ein um eine vertikale Achse 8 drehbares Zerkleinerungs- bzw. Mischwerkzeug 12 angeordnet, mit auf das Gut zerkleinernd und mischend einwirkenden Arbeitskanten. Durch diese Zerkleinerungs- bzw. Mischwerkzeuge wird das im Schneidverdichter 1 vorgelegte Polymermaterial gemischt und mit mechanischer Energie beaufschlagt, wodurch eine Erwärmung, aber kein Aufschmelzen, und eine gleichzeitige Mischung und Bewegung des Polymer-Materials erfolgt. Die Behandlung erfolgt unter Vakuum. Dadurch wird sowohl die Trocknung hygroskopischer Materialien z.B. von PET, PLA etc., sichergestellt, als auch eine allfällige Kristallisierung von amorphen Materialien, z.B. PS, sowie auch eine Entgiftung bzw. Dekontamination erreicht werden. Auch kann die Grenzviskosität durch Beschickung des Reaktors 1 mit vorgetrockneten PET Flakes, z.B. in einem, zweistufigen System, erhöht werden. Nach dieser Vorbehandlung wird das Material in die Schneckenspritrgießvorrichtung 10 beschickt.

Bei der an den Schneidverdichter 1 angeschlossenen Spritzgießvorrichtung handelt es sich um eine sogenannte Schneckenspritzgießvorrichtung 10. Diese und deren Wirkungsweise wurde ebenfalls bereits zuvor im Detail beschrieben, worauf hier verwiesen wird. Die Schneckenspritzgießvorrichtung 10 umfasst eine Schnecke 16, die in einem Gehäuse 17 gelagert ist. In Fig. 1 ist eine Ausführungsform ohne Shooting Pot 35 dargestellt, in Fig. 2 eine Ausführungsform mit Shooting Pot 35. Die Einzugsöffnung 27 der Schnecke 16 liegt annähernd auf der Höhe des Mischwerkzeuges 12 bzw. im Abstand des Mischwerkzeuges 12 vom Boden, und Ist vorzugsweise mit zumindest einer an den Schneidverdichter 1 angeschlossenen Leitung zur Erzeugung eines Vakuums und bzw. oder zur Begasung im Behälterinnenraum, versehen. Die Einzugsöffnung 27 ist tangential, gas- bzw. vakuumdicht und direkt an eine Austragöffnung 15 des Aufnahmebehälters 1 angeschlossen. Außerdem ist das Gehäuse 17 der Schnecke 16 in Richtung des Antriebes 20 gasdicht ausgeführt. In Richtung der Spritzgussform dichtet ohnehin die Schmelze ab.

Spritzgießmaschinen bestehen generell aus zwei Teilen, nämlich der Spritzeinheit bzw. Plastifiziereinheit, die das Kunststoffgranulat aufbereitet und unter Druck in das Werkzeug einspritzt, und der Schließeinheit, die das Werkzeug aufnimmt und es öffnet und schließt. In den Fig. 1 und 2 ist lediglich die Spritz- bzw. Plastifiziereinheit dargestellt.

Der Innendurchmesser des Gehäuses 17 ist gleich dem Außendurchmesser der Schnecke 16. Der Schneidverdichter 1 ist im hinteren Bereich des Gehäuses 17 angeordnet. Die Schnecke 16 wird über den Motor 20 angetrieben.

Durch die Einzugsöffnung 27 gelangt das vorbehandelte erwärmte bzw. erweichte, aber noch stückige Material ins Gehäuse 17. Vom Antrieb 20 gedreht, rotiert die Schnecke 16 im Gehäuse 17 und transportiert das Material vorwärts. Beim Thermoplast-Spritzgießen wird das Gehäuse 17 gegebenenfalls mittels elektrischer Heizbänder von außen erwärmt. Durch diese Hitze und die spezielle Geometrie der Schnecke 16, wird das Granulat nicht nur befördert, sondern auch geschert, dabei schmilzt der Kunststoff und plastifiziert und homogenisiert.

An der Spitze des Gehäuses befindet sich eine, in Fig. 1 nicht dargestellte. Düse 25, die den Übergang zum Werkzeug bildet.

Im Laufe des Dosiervorgangs wird die aufgeschmolzene Formmasse meist durch eine gegebenenfalls vorhandene Rückströmsperre bis zur Düse 25 transportiert und davor in einem Stauraum 26 gestaut. Um genügend Stauraum 26 für die Formmasse zu bieten, wird die Schnecke 16 axial nur mit einem geringen Druck (Staudruck) beaufschlagt, so dass sie sich nach hinten in Richtung des Schneidverdichters 1 bzw. Motors 20 verschieben kann (siehe Pfeile) und sich so zwischen Rückstromsperre und Düse 25 der sogenannte Schneckenvorraum 26 bildet, in dem sich das Massevolumen befindet. Der Staudruck wirkt gegen die Schmelze, so dass die Schmelze verdichtet wird, und zieht die Schnecke 16 nicht zurück. Der Druck, den die Schmelze ausübt, bewegt die Schnecke 16 zurück.

Beim nachfolgenden Einspritzvorgang wird die Schnecke 16 axial zur Düse 25 hin gedrückt, wobei sich die Rückströmsperre verriegelt und so das Massevolumen durch die Düse 25 in das Werkzeug gespritzt wird.

Die Schneckenspritzgießvorrichtung 10 arbeitet somit diskontinuierlich und weist im Unterschied zu Fig. 2 keinen Shooting pot 35 auf.

Diese Ausführungsform stellt eine einfache und kostengünstige Bauart dar. Gegebenenfalls können auch Filter zum Filtern der Schmelze vorgesehen sein.

In Fig. 2 ist eine weitere Ausführungsform dargestellt, die einen höheren Durchsatz gewährt. Dabei wird das aufgeschmolzene Material von der Schnecke 16 aus dem Gehäuse 17 durch einen, gegebenenfalls mit einem Rückschlagventil ausgestatteten, Kanal 37 in einen vorgeschalteten Shooting pot 35 gedrückt und von dort über einen unabhängig von der Schnecke 16 agierenden Kolben 36 mit hohem Druck durch die Düse 25 in die Form gespritzt.

In diesem Fall wird die Einspritzzeit zum Erzeugen von Schmelze in der Schnecke benützt, wodurch sich die Zykluszeiten verringern.

In beiden Fällen arbeitet der Schneidverdichter 1 kontinuierlich und der Spritzgussextruder 10 diskontinuierlich. Einrichtungen zum Filtrieren der Schmelze können ebenfalls vorgesehen sein.

## Patentansprüche

1. Verfahren zum Spritzgießen von, insbesondere thermoplastischem, Kunststoffmaterial, wobei das zu behandelnde Ausgangskunststoffmaterial, insbesondere vorliegend in Form von stückig bzw. teilchenförmig vorliegenden Polymerteilchen bzw. -flakes, zuerst einer Vorbehandlung bzw. Aufbereitung unterzogen wird, wobei das Kunststoffmaterial in zumindest einem kontinuierlich betriebenen Schneidverdichter (1) unter ständiger Mischung und gegebenenfalls Zerkleinerung bei einer Temperatur unterhalb der Schmelztemperatur, vorzugsweise über der Glasübergangstemperatur, des Kunststoffmaterials, erwärmt und erweicht wird, wobei zur Mischung und Erwärmung des Kunststoffmaterials zumindest ein Misch- bzw. Zerkleinerungswerkzeug (12) mit auf das Gut zerkleinernd und/oder mischend einwirkenden Arbeitskanten eingesetzt wird, wobei das auf diese Weise vorbehandelte und erweichte, aber noch stückige, Kunststoffmaterial, direkt, unmittelbar und ohne Zwischenstufe, in eine diskontinuierlich betriebene, direkt und unmittelbar an den Schneidverdichter (1) angeschlossene Schneckenspritzgießvorrichtung (10) mit einer in einem Gehäuse (17) rotierenden und darin axial verschiebbaren bzw. als Kolben wirkenden Schnecke (16) überführt, darin plastifiziert und zu einem Formteil, beispielsweise einer Preform, gespritzt wird, **dadurch gekennzeichnet, dass** das Kunststoffmaterial durch die Bewegung des Misch- bzw. Zerkleinerungswerkzeugs (12) mittels force-feeding in den Einzugsbereich der Schneckenspritzgießvonichtung (10) hineingedrückt wird.

2. Verfahren nach Anspruch 1, **dadurch gekennzeichnet, dass** die Schnecke (16) die Schmelze durch ihre axiale Verschiebung direkt unter hohem Druck in eine Spritzgussform einspritzt bzw. dass die Schnecke (16) als (hoch)druckerzeugender Kolben für die Schmelze wirkt.

3. Verfahren nach Anspruch 1, **dadurch gekennzeichnet, dass** die Schnecke (16) die Schmelze durch ihre axiale Verschiebung mit geringerem Druck in einen vom Gehäuse (17) räumlich getrennten, aber mit diesem in Fluidverbindung stehenden, Shooting pot (35) presst und dass die Schmelze von dort über einen, insbesondere von der Schnecke (16) unabhängig zuschaltbaren, Kolben (36) unter hohem Druck in eine Spritzgussform eingespritzt wird.

4. Verfahren nach einem der Ansprüche 1 bis 3, **dadurch gekennzeichnet, dass** alle Bearbeitungsschritte bzw. die Vorbehandlung bzw. Aufbereitung und/oder die Überführung und/oder das Spritzgießen des Materials unter Vakuum oder Schutzgas erfolgen.

5. Verfahren nach einem der Ansprüche 1 bis 4, **dadurch gekennzeichnet, dass** die Schmelze in der Schneckenspritzgießvorrichtung (10) gefiltert wird.

6. Verfahren nach einem der Ansprüche 1 bis 5, **dadurch gekennzeichnet, dass** die Erwärmung durch Beaufschlagung des Materials mit mechanischer Energie über das Misch- bzw. Zerkleinerungswerkzeug (12) erfolgt.

7. Verfahren nach einem der Ansprüche 1 bis 6, **dadurch gekennzeichnet, dass** das Kunststoffmaterial im Schneidverdichter (1) gleichzeitig mit der Erwärmung, insbesondere in einem Schritt, kristallisiert, getrocknet und/oder gereinigt und/oder dessen Grenzviskosität erhöht wird.

8. Vorrichtung zur Durchführung des Verfahrens nach einem der Ansprüche 1 bis 7, mit zumindest einem, insbesondere im wesentlichen zylindrischen und eine Bodenfläche (3) und eine Seitenwand (2) aufweisenden, kontinuierlich betreibbaren Schneidverdichter (1), in dem zumindest ein Misch- bzw. Zerkleinerungswerkzeug (12) angeordnet ist, durch das das im Schneidverdichter (1) vorgelegte, aufzubereitende Kunststoffmaterial mischbar, erwärmbar, erweichbar und gegebenenfalls zerkleinerbar ist, wobei an den Schneidverdichter (1) eine diskontinuierlich betreibbare Schneckenspritzgießvorrichtung (10) direkt angeschlossen ist, wobei die Schneckenspritzgießvorrichtung (10) eine in einem Gehäuse (17) drehbare Schnecke (16) zum Abtransport des vorbehandelten Materials aus dem Schneidverdichter (1) und zur nachfolgenden Plastifizierung des Materials aufweist, wobei die Schnecke (16) im Gehäuse (17) axial verschiebbar gelagert ist und als druckerzeugender Kolben für die Schmelze wirkt, **dadurch gekennzeichnet, dass** das Gehäuse (17) der Schneckenspritzgießvorrichtung (10) eine Einzugsöffnung (27) aufweist, mit der es direkt, unmittelbar und ohne Zwischenstufe an eine Austragsöffnung (15) des Schneidverdichters (1) angeschlossen ist, und das Misch- bzw. Zerkleinerungswerkzeug (12), die Austragsöffnung (15) und die Schneckenspritzgießvorrichtung (10) so angeordnet sind, dass das aufbereitete Kunststoffmaterial mittels force-feeding in die Einzugsöffnung (27) der Schneckenspritzgießvorrichtung (10) hineindrückbar ist.

9. Vorrichtung nach Anspruch 8, **dadurch gekennzeichnet, dass** das Gehäuse (17) mit der Einzugsöffnung (27) an die Austragöffnung (15) des Schneidverdichters (1), radial oder tangential, vorzugsweise gas- bzw. vakuumdicht, angeschlossen ist, wobei die Austragöffnung (15) vorzugsweise in der Seitenwand (2) nahe der Bodenfläche (3) des Schneidverdichters (1), insbesondere in der Höhe der Misch- bzw. Zerkleinerungswerkzeuge (12), angeordnet ist.

10. Vorrichtung nach einem der Ansprüche 8 bis 9, **dadurch gekennzeichnet, dass** die Schnecke (16) die sich in einem Stauraum (26) vor der Düse (25) angesammelte Schmelze durch ihre axiale Verschiebung direkt unter hohem Druck durch die Düse (25) in eine Spritzgussform einspritzt.

11. Vorrichtung nach einem der Ansprüche 8 bis 10, **dadurch gekennzeichnet, dass** ein dem Gehäuse (17) nachgeordneter, insbesondere mit dem Gehäuse (17) über einen Kanal (37) strömungstechnisch verbundener, gegebenenfalls baulich getrennter, Shooting pot (35) vorgesehen ist und dass die Schnecke (16) die Schmelze, insbesondere durch ihre axiale Verschiebung, mit geringerem Druck in diesen Shooting pot (35) presst, wobei im Shooting pot (35) zumindest ein Kolben (36) vorgesehen ist, durch den die Schmelze aus dem Shooting pot (35) unter hohem Druck in eine Spritzgussform eingespritzt wird.

12. Vorrichtung nach einem der Ansprüche 8 bis 11, **dadurch gekennzeichnet, dass** die Schneckenspritzgießvorrichtung (10) zumindest eine Rücklaufsperre, insbesondere in Form eines zwischen dem Shooting-Pot (35) und der Schnecke (16) und/oder im Kanal (37) angeordneten Rückschlagventils, umfasst.

13. Vorrichtung nach einem der Ansprüche 8 bis 12, **dadurch gekennzeichnet, dass**, insbesondere zwischen der Schnecke (16) und der Spritzgussform, zumindest ein Schmelzefilter angeordnet ist.

14. Vorrichtung nach einem der Ansprüche 8 bis 13, **dadurch gekennzeichnet, dass** das Misch- bzw. Zerkleinerungswerkzeug (12) um eine vertikale Achse drehbar ist und/oder auf mehreren übereinanderliegenden Ebenen angeordnet ist.

## Claims

1. A process for injection molding, particularly thermoplastic, plastic materials, wherein the plastic raw material to be treated, particularly in the form lumpy or particulate polymer particles or flakes, is first subjected to a pretreatment or treatment, in which the plastic material is heated and softened in at least one continuously operated cutter compactor (1) under permanent mixing and optional crushing at a temperature below the melting temperature, preferably above the glass transition temperature, of the plastic material, wherein at least one mixing and/or crushing tool (12) with treating edges having a crushing and/or mixing effect on the material is used for mixing and heating the plastic material, wherein the thus pretreated and softened, but still lumpy, plastic material is transported, directly, immediately and without any intermediate step, to a discontinuously operating screw injection molding device (10), being directly and immediately connected to said cutter compactor (1) and having a screw (16) being rotatable in a housing (17) and axially displacable or acting as a plunger therein, and is plastified and injection molded therein to form a molded article, such as a preform, **characterized in that** the plastic material is force-fed into the introduction area of the screw injection molding device (10) by the movement of the mixing and/or crushing tool (12).

2. The process according to claim 1, **characterized in that** the screw (16) injects the melt directly into an injection mold under high pressure by its axial displacement or **in that** the screw (16) acts as a plunger which (high) pressurizes the melt.

3. The process according to claim 1, **characterized in that** the screw (16), by its axial displacement, force-feeds the melt under a lower pressure into a shooting pot (35) which is spatially separated from the housing (17), but is in fluid communication with it, and **in that** the melt is injected under high pressure from the shooting pot (35) into an injection mold by means of a plunger (36), which is particularly activatable independently from the screw.

4. The process according to any one of the claims 1 to 3, **characterized in that** all processing steps or the pretreatment and treatment and/or the transport and/or the injection molding of the material are carried out in vacuum or a protective gas.

5. The process according to any one of the claims 1 to 4, **characterized in that** the melt is filtered in the screw injection molding device (10).

6. The process according to any one of the claims 1 to 5, **characterized in that** the heating is by mechanically energizing the material via the mixing and/or crushing tool (12).

7. The process according to any one of the claims 1 to 6, **characterized in that** the plastic material is crystallized, dried and/or purified, and/or its intrinsic viscosity is increased, while it is heated in the cutter compactor (1), particularly in a single step.

8. A device for carrying out the process according to any one of the claims 1 to 7, comprising at least one continuously operatable cutter compactor (1), which particularly is essentially cylindrical and has a bottom area (3) and a lateral wall (2) and in which at least one mixing and/or crushing tool (12) is disposed, by which tool the plastic material to be treated being provided in the cutter compactor (1) can be mixed, heated, softened, and optionally crushed, a discontinuously operatable screw injection molding device (10) being directly connected to said cutter compactor (1), wherein said screw injection molding device (10) comprises a screw (16), being rotatable in a housing (17), for transporting the pretreated material out of the cutter compactor (1) and subsequently plastifying said material, said screw (16) being mounted to be axially displaceable in said housing (17) and acting as a plunger which pressurizes the melt, **characterized in that** the housing (17) of the screw injection molding device (10) has an introduction opening (27) connecting it directly, immediately and without any intermediate step to a discharge opening (15) of the cutter compactor (1), and **in that** the mixing and/or crushing tool (12), the discharge opening (15), and the screw injection molding device (10) are arranged in such way that the treated plastic material can be force-fed into the introduction opening (27) of the screw injection molding device (10).

9. The device according to claim 8, **characterized in that** the introduction opening (27) of the housing (17) is radially or tangentially connected to the discharge opening (15) of the cutter compactor (1), preferably in a gas and vacuum tight manner, the discharge opening (15) being preferably disposed in the lateral wall (2) close to the bottom area (3) of the cutter compactor (1), particularly at the same height as the mixing and/or crushing tools (12).

10. The device according to claim 8 or claim 9, **characterized in that** the axial displacement of the screw (16) causes the melt collected in a holding space (26) in front of the nozzle (25) to be injected under high pressure directly into an injection mold through the nozzle (25).

11. The device according to any one of the claims 8 to 10, **characterized in that** a shooting pot (35) is provided downstream of the housing (17), particularly being in fluid communication with the housing (17) via a passage (37) and, optionally, constructionally separated thereform, and **in that** the screw (16), particularly by its axial displacement, pushes the melt under a lower pressure into said shooting pot (35), wherein at least one plunger (36) is provided in said shooting pot (35), injecting the melt under high pressure from the shooting pot (35) into an injection mold.

12. The device according to any one of the claims 8 to 11, **characterized in that** the screw injection molding device (10) comprises at least one non-return device, particularly in the form of a non-return valve disposed between the shooting pot (35) and the screw (16) and/or in the passage (37).

13. The device according to any one of the claims 8 to 12, **characterized in that** at least one filter for the melt is provided, particularly between the screw (16) and the injection mold.

14. The device according to any one of the claims 8 to 13, **characterized in that** the mixing and/or crushing tool (12) is rotatable about a vertical axis and/or disposed at several superimposed levels.

## Revendications

1. Procédé de moulage par injection de matières synthétiques, notamment thermoplastiques, la matière synthétique brute à traiter, notamment sous forme de particules ou de flacons polymères en morceaux ou en particules, étant d'abord soumise à un prétraitement ou un traitement, la matière synthétique étant réchauffée et amollie dans au moins un broyeur-compacteur (1) continu en étant mélangée constamment et, facultativement, broyée à une température inférieure à son point de fusion, de préférence supérieure à sa température de transition vitreuse, au moins un outil mélangeur et/ou broyeur (12) avec des bords de traitement qui broient et/ou mélangent la matière étant utilisé pour mélanger et réchauffer ladite matière synthétique, qui, ainsi prétraitée et amollie, mais encore sous forme de morceaux, est transportée, directement et immédiatement, sans étapes intermédiaires, à un dispositif de moulage par injection à vis (10) discontinu qui est directement et immédiatement relié audit broyeur-compacteur (1) et comprend une vis (16) qui tourne dans un cylindre (17) et est déplaçable dans une direction axiale ou sert de plongeur, et est plastifiée à l'intérieur de ce dispositif (10) et moulée par injection pour obtenir une pièce moulée, comme une préforme, par exemple, **caractérisé en ce que** ladite matière synthétique est alimentée sous pression à la zone d'apport dudit dispositif de moulage par injection à vis (10) par le mouvement dudit outil broyeur et mélangeur (12).

2. Procédé selon la revendication 1, **caractérisé en ce que**, par son déplacement axiale, ladite vis (16) injecte la masse fondue directement et sous haute pression dans un moule de moulage par injection et **en ce que** ladite vis (16) sert de plongeur (16) qui exerce une (haute) pression sur la masse fondue.

3. Procédé selon la revendication 1, **caractérisé en ce que**, par son déplacement axiale, la vis (16), en exerçant une pression plus basse, transporte la masse fondue sous pression à un pot d'injection (35), ledit pot d'injection (35) étant séparé du cylindre (17), mais se trouvant en communication fluide avec celui-ci, et **en ce que** la masse fondue est injectée sous haute pression dudit pot d'injection (35) dans un moule de moulage par injection par un plongeur (36) qui peut être opéré indépendamment de ladite vis (16).

4. Procédé selon l'une des revendications 1 à 3, **caractérisé en ce que** toutes les étapes de traitement ou de prétraitement et le traitement et/ou le transport et/ou le moulage par injection de la matière sont accomplies sous vacuum ou sous un gaz protecteur.

5. Procédé selon l'une des revendications 1 à 4, **caractérisé en ce que** la masse fondue est filtrée dans le dispositif de moulage par injection à vis (10).

6. Procédé selon l'une des revendications 1 à 5, **caractérisé en ce que** le réchauffage de la matière se fait par l'application d'énergie mécanique par l'outil mélangeur et/ou broyeur (12).

7. Procédé selon l'une des revendications 1 à 6, **caractérisé en ce que** la matière synthétique est cristallisée, séchée et/ou purifiée et/ou la viscosité limite de la matière est augmentée pendant que ladite matière est réchauffée dans le broyeur-compacteur (1), notamment en une seule étape.

8. Dispositif pour effectuer un procédé selon l'une des revendications 1 à 7, ledit dispositif ayant au moins un broyeur-compacteur (1) continu, qui est notamment sensiblement cylindrique et a une zone de fond (3) et une paroi latérale (2) et dans lequel au moins un outil broyeur et mélangeur (12) est disposé, ledit outil pouvant mélanger, réchauffer, plastifier et, facultativement, broyer la matière synthétique à traiter qui est presentée dans ledit broyer-compacteur (1); un dispositif de moulage par injection à vis (10) discontinu qui est directement relié audit broyeur-compacteur (1), ledit dispositif de moulage par injection à vis (10) comprenant une vis (16) qui tourne dans un cylindre (17) pour transporter la matière prétraitée hors du broyeur-compacteur (1) et, puis, plastifier ladite matière synthétique, ladite vis (16) étant disposée pour être déplaçable dans une direction axiale dans ledit cylindre (17) et servant de plongeur qui exerce de la pression sur la masse fondue, **caractérisé en ce que** le cylindre (17) du dispositif de moulage par injection à vis (10) comprend un orifice d'introduction (27) relié directement, immédiatement et sans étape intermédiaire à un orifice de décharge (15) du broyeur-compacteur (1) et **en ce que** l'outil broyeur et mélangeur (12), l'orifice de décharge (15) et le dispositif de moulage par injection à vis (10) sont arrangées ainsi que la matière synthétique traitée peut être alimentée sous pression à l'orifice d'introduction (27) du dispositif de moulage par injection à vis (10).

9. Dispositif selon la revendication 8, **caractérisé en ce que** l'orifice d'introduction (27) du cylindre (17) est relié radialement ou tangentiellement à l'orifice de décharge (15) du broyeur-compacteur (1), de préférence de manière étanche au gaz et au vide, ledit orifice de décharge (15) étant, de préférence, disposé dans la paroi latérale (2) près de la zone du fond (3) du broyeur-compacteur (1), notamment à la même hauteur que les outils mélangeurs et broyeurs (12).

10. Dispositif selon la revendication 8 ou 9, **caractérisé en ce que** le déplacement axial de la vis (16) provoque l'injection sous haute pression de la masse fondue collectée dans l'espace de retenue (26) avant la filière (25) à travers ladite filière (25) directement dans un moule de moulage par injection.

11. Dispositif selon l'une des revendications 8 à 10, **caractérisé en ce qu'**un pot d'injection (35) est prévu en aval du cylindre (17), notamment en communication fluide avec ledit cylindre (17) à travers un conduit (37) et facultativement séparé de celui-ci, et **en ce que** le déplacement axial de la vis (16) pousse la masse fondue, sous une pression plus basse, dans ledit pot d'injection (35), au moins un plongeur (36) étant prévu dans ledit pot d'injection (35), injectant la masse fondue sous haute pression dudit pot d'injection (35) dans un moule de moulage par injection.

12. Dispositif selon l'une des revendications 8 à 11, **caractérisé en ce que** le dispositif de moulage par injection à vis (10) comprend au moins un élément d'obturation, notamment sous forme d'un soupape de non-retour entre le pot d'injection (35) et la vis (16) et/ou le conduit (37).

13. Dispositif selon l'une des revendications 8 à 12, **caractérisé en ce qu'**au moins un filtre pour la masse fondue est prévu, notamment entre la vis (16) et le moule de moulage par injection.

14. Dispositif selon l'une des revendications 8 à 13, **caractérisé en ce que** ledit outil broyeur et mélangeur (12) peut tourner autour d'un axe vertical et/ou en est aménagé à plusieurs niveaux superposés.
